# EUROPEAN PATENT SPECIFICATION

(11) **EP 2 726 374 B1**
(45) Date of publication and mention of the grant of the patent: **12.10.2016**
(21) Application number: 12732934.0
(22) Date of filing: 28.06.2012
(51) Int. Cl.: B60N 2/46, B64D 11/06, B60N 3/10

(54) **RETRACTABLE ARMREST**
EINZIEHBARE ARMLEHNE
ACCOUDOIR RÉTRACTABLE

(30) Priority: 28.06.2011 US 201161501884 P
(43) Date of publication of application: 07.05.2014
(73) Proprietor: Zodiac Seats US LLC, Gainesville, TX 76240 (US)
(72) Inventor: ALLEN, John, Sanger, TX 76266 (US); HEREDIA, Homero, Chihuahua (MX)
(74) Representative: Phillips & Leigh
(86) International application number: PCT/US2012/044554
(87) International publication number: WO 2013/003540

(56) References cited:
- EP-A1- 0 359 890
- EP-A1- 0 597 140
- DE-B3-102006 010 459
- DE-B3-102007 049 645
- FR-A1- 2 565 085
- US-A1- 2004 217 642
- US-B1- 6 213 546

## Description

### CROSS REFERENCE TO RELATED APPLICATIONS

### FIELD OF THE INVENTION

The field of the invention relates to passenger seat assemblies. More specifically, it relates to armrests of passenger seat assemblies.

### BACKGROUND

Many passenger seat assemblies, such as those on passenger aircrafts, buses, trains, and the like, are arranged so that each passenger seat contains one or more armrests. These armrests provide rest for the passenger's arm, while also providing a subtle division between passenger seats.

In a number of passenger seat assemblies, however, armrests are fixed or otherwise stationary, prohibiting the displacement of the armrest and thereby limiting the passenger's use of the passenger seat assembly. For example, a fixed armrest limits or prevents the combined use of two or more seats by a single passenger, such as for lying down. Known adjustable armrests do not fully remedy this problem, and have other deficiencies as well. First, known adjustable armrests pivot upward into the passenger seat assembly. While this adjustment removes the division between passenger seats, it does not always provide efficient combined use of the seats due to spacing or gaps between the seat cushions. Second, the range of adjustability of these known armrests, typically through the use of a single pivot, is limited, often providing only two armrest positions: (1) a single, predetermined horizontal armrest position and (2) a stowed position. This single, pre-determined horizontal armrest may not be the desired armrest position for a number of passengers, based on their intended use or general stature.

An example of prior art is provided by EP0359890.

Thus, there may exist a need for an improved, multi-adjustable armrest, fitting a wider range of passengers, and an armrest that may be retracted to a position level or flush with one or more seat cushions of the passenger seat assembly.

### SUMMARY

The retractable armrest system of the present invention is claimed in claim 1 and dependent claims. Method claim 7 claims the method of retracting the retractable armrest system.

### BRIEF DESCRIPTION OF THE DRAWINGS

Figure 1 is a perspective view of a retractable armrest system according to certain embodiments of the present invention.
Figure 2 is a side view of the retractable armrest system of Figure 1 showing the adjustable positioning of the armrest.
Figure 3 is a side view of the retractable armrest system of Figure 1 showing the adjustable positioning of the support bar.
Figure 4 is a side view of a retractable armrest system according to certain embodiments of the present invention showing the adjustable positioning of the armrest.
Figure 5 is a side view of the retractable armrest system of Figure 4 showing the adjustable positioning of the support bar.
Figure 6 is a side view of a retractable armrest system which is not according to the present invention showing the adjustable positioning of the support bar.
Figure 7 is another perspective view of the retractable armrest system of Figure 1.

### DETAILED DESCRIPTION

Embodiments of the invention provide retractable armrests and retractable armrest systems. While the retractable armrests and retractable armrest systems are generally discussed for use with aircrafts, they are by no means so limited. Rather, embodiments of the retractable armrests and retractable armrest systems may be used in connection with any mode of transportation or otherwise as desired.

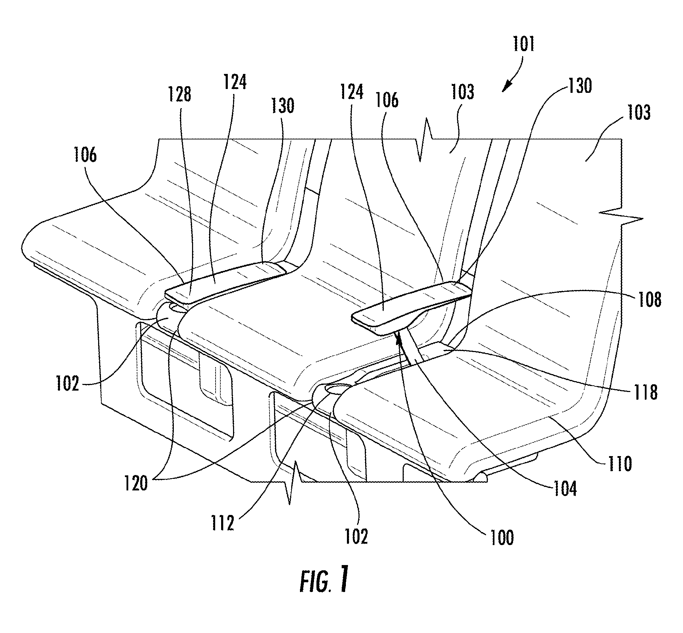

Figures 1-7 illustrate embodiments of a retractable armrest system 100. In these embodiments, the retractable armrest system 100 comprises a receptacle 102, a support bar 104, and an armrest 106.

The receptacle 102, as illustrated in Figure 1, provides the base for the support bar 104. In some embodiments, the retractable armrest system 100 may be coupled to a passenger seat assembly 101 comprising at least one seat pan 108, at least one seat cushion 110, and other known components. One of ordinary skill in the relevant art, however, will understand that the passenger seat assembly 101 may comprise one or more other mechanisms, or combinations thereof, in addition to the components listed above. The passenger seat assembly 101 may be formed of materials including but not limited to plastics, composite plastics, aluminum, other metallic materials, composite materials, or other similar materials. The passenger seat assembly 101 may comprise one or more passenger seats 103.

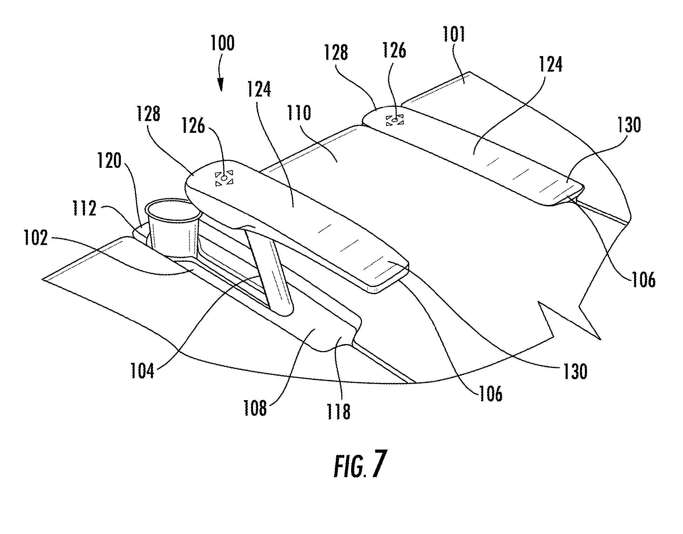

Throughout embodiments, the configuration of the retractable armrest system 100 may vary as desired. In some embodiments, one or more portions of the receptacle 102 may be configured to receive, or otherwise interact with, the armrest 106 upon adjustment toward the receptacle 102, such as during stowage or retraction of the armrest 106. For example, in some embodiments, such as the embodiments illustrated in Figures 1 and 7, the receptacle 102 may be configured to receive the armrest 106 upon stowage or retraction such that the armrest 106 may be positioned level or flush with the at least one seat cushion 110 or other top surface of the receptacle 102. In some embodiments, as illustrated in Figure 7, the receptacle 102 may comprise one or more internal features 112 that may be accessed at least when the support bar 104 is in a deployed position relative to the receptacle 102. The one or more internal features 112 may include, but are not limited to, one or more cup holders, one or more outlet ports, and other similar passenger seat features. One of ordinary skill in the relevant art, however, will understand that the receptacle 102 may comprise one or more other internal features 112, or combinations thereof, in addition to the features listed above.

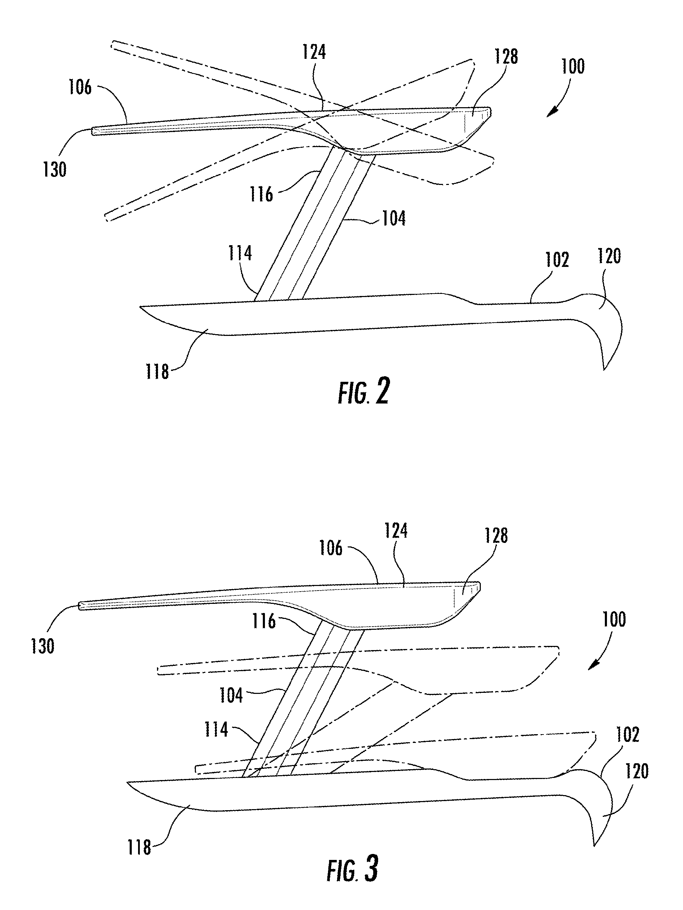

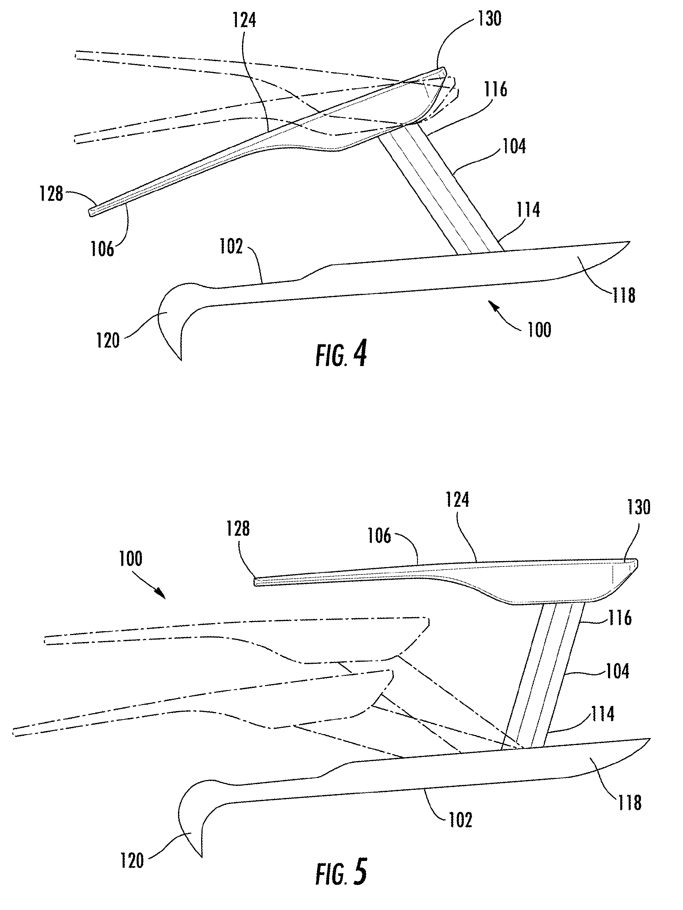

The armrest 106 provides support for one or more arms of one or more passengers, and may also serve as a subtle divider between passenger seats 103 if desired. The support bar 104 allows for adjustment of the armrest 106 relative to the receptacle 102, as illustrated in Figures 3 and 5. For example, the support bar 104 may adjust the armrest 106 to and from a stowed position within or adjacent the receptacle 102. In these embodiments, the armrest 106 may be understood to be retractable. The support bar 104 may comprise a first end 114 and a second end 116. The first end 114 of the support bar 104 is pivotally coupled to the receptacle 102 and the second end 116 of the support bar 104 is pivotally coupled to the armrest 106.
Suitable pivotal coupling mechanisms may include but are not limited to pins, fasteners, hinges, and other similar mechanisms.

For example, in some embodiments, the first end 114 of the support bar 104 may be pivotally coupled to the receptacle 102 and/or the second end 116 of the support bar 104 may be pivotally coupled to the armrest 106 via a friction hinge, which relies on a constant friction force within the hinge to hold a position until an excessive torque is applied to overcome the hinge resistance torque and move the support bar 104 and/or the armrest 106 to another position within its range of motion. As a result, the support bar 104 and/or the armrest 106 may only be adjusted by direct, intentional force or manipulation by the passenger. In some embodiments, the friction force between the support bar 104 and the receptacle 102 and/or between the support bar 104 and the armrest 106 will likewise prevent unintentional adjustment of the support bar 104 and/or the armrest 106. In other embodiments, the support bar 104 and/or the armrest 106 may be secured into place after adjustment by a variety of mechanisms, including but not limited to a securing mechanism, adjustable fastener, or button mechanism.

In some embodiments, the armrest 106 may be coupled to the second end 116 of the support bar 104 in a variety of locations and configurations. For example, as shown in Figures 2 and 3, the second end 116 of the support bar 104 is pivotally coupled to a middle region of the armrest 106, so that a forward portion 128 and an aft portion 130 of the armrest 106 may pivot relative to the support bar 104, thus providing a range of inclined and/or reclined positions for the armrest 106 relative to the support bar 104. In other embodiments, as shown in Figures 4-6, the second end 116 of the support bar 104 may be pivotally coupled to the aft portion 130 of the armrest 106, so that the forward portion 128 may pivot relative to the support bar 104, while the aft portion 130 remains relatively stationary relative to the support bar 104. One of ordinary skill in the relevant art will understand that the support bar 104 may be coupled to the armrest 106 in any suitable location that provides the desired amount of adjustment of the armrest 106 relative to the support bar 104. Moreover, in these embodiments, the armrest 106 may be slidingly coupled to the second end 116 of the support bar 104 by a variety of mechanisms, including but not limited to one or more gears, a track, or other similar mechanisms. In these embodiments, the armrest 106 may be adjusted forward and aft relative to the support bar 104.

In some embodiments, the first end 114 of the support bar 104 may be coupled to the receptacle 102 in a variety of locations and configurations. For example, as shown in Figures 2-5, the first end 114 of the support bar 104 is pivotally coupled to an aft end 118 of the receptacle 102. In this configuration, the support bar 104 rotates forward into a stowed position adjacent the receptacle 102, wherein the forward portion 128 of the armrest 106 is positioned adjacent a forward end 120 of the receptacle 102. The support bar 104 then rotates aft into a deployed position, wherein the armrest 106 is raised and spaced apart from the receptacle 102. In certain embodiments, in the deployed position, the support bar 104 may be rotated aft to an angle that is less than 90 degrees relative to the receptacle 102, as shown in Figures 2-4. In other embodiments, in the deployed position, the support bar 104 may be rotated aft to an angle that is equal to or greater than 90 degrees relative to the receptacle 102, as shown in Figure 5.

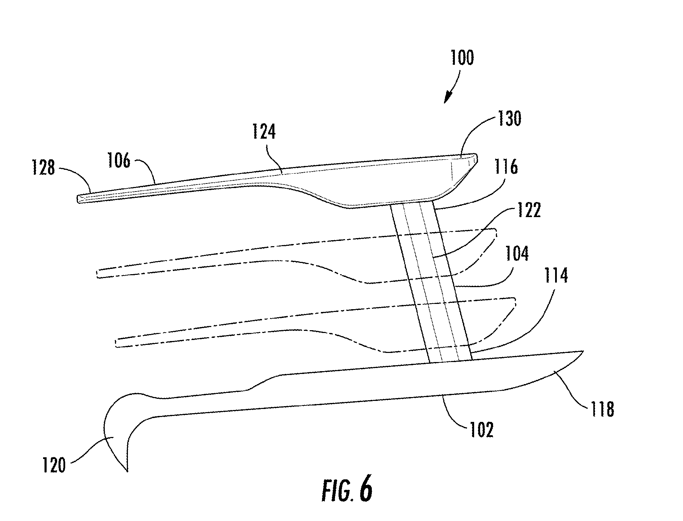

In some embodiments, not covered by the present invention, the support bar 104 may be slidingly coupled to the
receptacle 102, as shown in Figure 6. In these embodiments, the support bar 104 may comprise a track 122, which may be configured to engage with the receptacle 102 so that the support bar 104 is configured to pass through the receptacle 102 when traveling between stowed and deployed positions. For example, in the stowed position, the support bar 104 is inserted through the receptacle 102 until the armrest 106 is positioned adjacent the receptacle 102. In the deployed position, the support bar 104 may be extended through the receptacle 102 until the armrest 106 is raised and spaced apart from the receptacle 102. Any suitable mechanism may be used to hold the support bar 104 in position relative to the receptacle 102 including but not limited to friction lock, gas locks, releasable pins, fasteners, and other similar mechanisms.

The track 122 may comprise at least one slot (not illustrated) to which an internal projection (not illustrated) of the receptacle 102 may couple. One of ordinary skill in the relevant art, however, will understand that the support bar 104 may be slidingly coupled to the receptacle 102 by a variety of other known mechanisms, in addition to those mechanisms listed above.

The armrest 106 may be formed of materials including but not limited to plastics, composite plastics, aluminum, other metallic materials, composite materials, or other similar materials. In some embodiments, the armrest 106 may comprise an arm cushion. Throughout embodiments, the shape and/or dimensions of the armrest 106 may vary as desired. For example, in some embodiments, the armrest 106 may resemble an elongated rectangular prism or other similar shape. In some embodiments, the armrest 106 may have variable thickness or depth across its shape. In some embodiments, the armrest 106 may be solid. In other embodiments, the armrest 106 may be hollow. In some embodiments, the armrest 106 may be configured to engage with a configuration of the receptacle 102 when positioned adjacent the receptacle 102, such as during stowage or retraction. For example, in some embodiments, such as the embodiments illustrated in Figures 1 and 7, the armrest 106 may be configured to engage with the receptacle 102 when positioned adjacent the receptacle 102 such that the armrest 106 may be positioned approximately level or flush with the at least one seat cushion 110 or other top surface of the receptacle 102 in a stowed position. In some embodiments, a top surface 124 of the armrest 106 may be flat.

The support bar 104 may be formed of materials including but not limited to plastics, composite plastics, aluminum, other metallic materials, composite materials, or other similar materials. Throughout embodiments, the shape and/or dimensions of the support bar 104 may vary. For example, in some embodiments, the support bar 104 may resemble an elongated prism or cylinder. In some embodiments, the support bar 104 may be solid. In other embodiments, the support bar 104 may be hollow.

In some embodiments, the armrest 106 may comprise at least one control 126, as illustrated in Figure 7, including but not limited to an armrest control, an audio/visual control, a seat control, and other similar controls. One of ordinary skill in the relevant art, however, will understand that the armrest 106 may comprise one or more other controls or features, or combinations thereof, in addition to the controls listed above.

In use, a passenger may adjust the armrest 106 into various positions as desired via the retractable armrest system 100. For example, from a stowed position, the passenger may first pivot the support bar 104, and thereby the armrest 106, to a desired angle relative to the receptacle 102, as illustrated in Figures 3 and 5. Likewise, the passenger may pull the support bar 104 upward, and thereby the armrest 106, to a desired height relative to the receptacle 102, as illustrated in Figure 6.

From this variable height and position, the passenger may further adjust the armrest 106 relative to the support bar 104 to achieve a variable armrest angle or position. In embodiments wherein the armrest 106 is pivotally coupled to the support bar 104, the passenger may pivot the armrest 106 about the support bar 104, as illustrated in Figures 2 and 4. In some embodiments, at least when the support bar 104 is in a deployed position, the passenger may also access one or more of the internal features 112 of the receptacle 102 as well, such as a cup holder. After use, the passenger may stow the support bar 104, and thereby the armrest 106, by pivoting and/or pushing the support bar 104 toward the receptacle 102 and adjusting the armrest 106 for receipt by the configuration of the receptacle 102, as illustrated in Figures 1 and 7.

## Claims

1. A retractable armrest system (100) for a passenger seat assembly (101), the armrest system (100) comprising:
(a) a receptacle (102);
(b) a support bar (104) comprising a first end (114) and a second end (116), wherein the first end (114) is coupled to the receptacle (102); and
(c) an armrest (106) coupled to the second end (116) of the support bar (104),
wherein the armrest (106) may be lowered to stowed position raised to a deployed position and further adjusted to achieve various armrest positions relative to the support bar (104);
wherein the armrest (106) is configured to engage with the receptacle (102) in the stowed position; and
wherein the support bar (104) is configured to pivot between stowed and deployed positions
relative to the receptacle (102), wherein the support bar (104) may be adjusted to achieve various armrest positions relative to the receptacle (102).

2. The retractable armrest system (100) of Claim 1, wherein the receptacle (102) is
configured to receive the armrest (106) in a stowed position.

3. The retractable armrest system (100) of Claim 2, wherein a top surface (124) of the armrest (106) is flat.

4. The retractable armrest system (100) of and of Claims 1 to 3, wherein the receptacle (102) comprises at least one internal feature (112) accessible at least when the support bar (104) is in a deployed position.

5. The retractable armrest system (100) of Claim 4, wherein the armrest (106) comprises at least one control (126).

6. A passenger seat assembly (101) comprising a retractable armrest system (100) as claimed in any preceding claim, in which when the armrest (106) is engaged with the receptacle (102) in a stowed position an upper surface (124) of the armrest (106) is approximately flush with a seat cushion (110) positioned adjacent the receptacle (102).

7. A method of retracting an armrest system (100) as claimed in any of Claims 1 to 5, wherein the method steps comprising:
(i) pivoting the support bar (104) toward the receptacle (102);
(ii) adjusting the armrest (106) relative to the support bar (104) for engagement with the receptacle (102); and
(iii) stowing the armrest (106) such that the armrest (106) is approximately flush with a seat cushion (110) positioned adjacent the receptacle (102).

## Patentansprüche

1. Ein versenkbares Armlehnensystem (100) für eine Fahrgastsitzanordnung (101), wobei das Armlehnensystem (100) umfasst:
(a) eine Aufnahme (102);
(b) eine Trägerstange (104), die ein erstes Ende (114) und ein zweites Ende (116) aufweist, wobei das erste Ende (114) mit der Aufnahme (102) verbunden ist; und
(c) eine Armlehne (106), die an das zweite Ende (116) der Trägerstange (104) gekoppelt ist,
wobei die Armlehne (106) in eine versenkte Stellung abgesenkt werden kann, in eine ausgefahrene Stellung angehoben werden kann und weiter eingestellt werden kann, um verschiedene Armlehnenstellungen relativ zur Trägerstange (104) einzunehmen;
wobei die Armlehne (106) konfiguriert ist, in der versenkten Stellung in die Aufnahme (102) einzugreifen;
wobei die Trägerstange (104) konfiguriert ist, zwischen der versenkten Stellung und der ausgefahrenen Stellung relativ zur Aufnahme (102) zu schwenken,
wobei die Trägerstange (104) eingestellt werden kann, verschiedene Armlehnenstellungen relativ zur Aufnahme (102) einzunehmen.

2. Das versenkbare Armlehnensystem (100) gemäß Anspruch 1,
wobei die Aufnahme (102) konfiguriert ist, die Armlehne (106) in einer versenkten Stellung aufzunehmen.

3. Das versenkbare Armlehnensystem (100) gemäß Anspruch 2, wobei eine obere Fläche (124) der Armlehne (106) flach ist.

4. Das versenkbare Armlehnensystem (100) gemäß Anspruch 1 bis 3, wobei die Aufnahme (102) mindestens eine interne Funktion (112) umfasst, die zumindest zugänglich ist, wenn sich die Trägerstange (104) in einer ausgefahrenen Stellung befindet.

5. Das versenkbare Armlehnensystem (100) gemäß Anspruch 4, wobei die Armlehne (106) mindestens eine Steuerung (126) umfasst.

6. Eine Fahrgastsitzanordnung (101) enthaltend ein versenkbares Armlehnensystem (100) gemäß irgendeinem der vorherigen Ansprüche, bei der, wenn die Armlehne (106) in der versenkten Stellung in die Aufnahme (102) eingreift, eine obere Fläche (124) der Armlehne (106) in etwa bündig mit einem Sitzpolster (110) ist, das sich benachbart zur Aufnahme (102) befindet.

7. Ein Verfahren zum Versenken eines Armlehnensystems (100) gemäß irgendeinem der Ansprüche 1 bis 5, wobei die Verfahrensschritte umfassen:
(i) Schwenken der Trägerstange (104) in Richtung der Aufnahme (102);
(ii) Einstellen der Armlehne (106) relativ zu der Trägerstange (104) zum Eingriff in die Aufnahme (102); und
(iii) Versenken der Armlehne (106) derart, dass die Armlehne (106) mit einem Sitzposter (110) in etwa bündig ist, das sich benachbart zur Aufnahme (102) befindet.

## Revendications

1. Système d'accoudoir rétractable (100) pour un ensemble siège passager (101), le système d'accoudoir (100) comprenant :
(a) un socle (102) ;
(b) une barre de support (104) comprenant une première extrémité (114) et une seconde extrémité (116), la première extrémité (114) étant couplée au socle (102) ; et
(c) un accoudoir (106) couplé à la seconde extrémité (116) de la barre de support (104),
dans lequel l'accoudoir (106) peut être abaissé à une position rangée, élevé à une position déployée et en outre ajusté pour atteindre diverses positions d'accoudoir par rapport à la barre de support (104) ;
dans lequel l'accoudoir (106) est configuré pour s'enclencher avec le socle (102) dans la position rangée ; et
dans lequel la barre de support (104) est configurée pour pivoter entre les positions rangée et déployée par rapport au socle (102), la barre de support (104) pouvant être ajustée pour atteindre diverses positions d'accoudoir par rapport au socle (102).

2. Système d'accoudoir rétractable (100) selon la revendication 1, dans lequel le socle (102) est configuré pour recevoir l'accoudoir (106) dans une position rangée.

3. Système d'accoudoir rétractable (100) selon la revendication 2, dans lequel une surface de dessus (124) de l'accoudoir (106) est plate.

4. Système d'accoudoir rétractable (100) selon les revendications 1 à 3, dans lequel le socle (102) comprend au moins une inclusion (112) accessible au moins lorsque la barre de support (104) est dans une position déployée.

5. Système d'accoudoir rétractable (100) selon la revendication 4, dans lequel l'accoudoir (106) comprend au moins une commande (126).

6. Ensemble siège passager (101) comprenant un système d'accoudoir rétractable (100) tel que revendiqué dans l'une quelconque des revendications précédentes, dans lequel lorsque l'accoudoir (106) est enclenché avec le socle (102) dans une position rangée, une surface supérieure (124) de l'accoudoir (106) est approximativement de niveau avec un coussin de siège (110) positionné adjacent au socle (102).

7. Procédé de rétraction d'un système d'accoudoir (100) selon l'une quelconque des revendications 1 à 5, dans lequel les étapes de procédé comprenant :
(i) le pivotement de la barre de support (104) vers le socle (102) ;
(ii) l'ajustement de l'accoudoir (106) par rapport à la barre de support (104) pour enclenchement avec le socle (102) ; et
(iii) le rangement de l'accoudoir (106) de telle sorte que l'accoudoir (106) soit approximativement de niveau avec un coussin de siège (110) positionné adjacent au socle (102).
